(19) Europäisches Patentamt

European Patent Office

Office européen des brevets

(11) **EP 2 277 717 B1**

(12) **FASCICULE DE BREVET EUROPEEN**

(45) Date de publication et mention
de la délivrance du brevet:
**01.05.2013 Bulletin 2013/18**

(51) Int Cl.:
***B60B 7/01*** *(2006.01)*

(21) Numéro de dépôt: **10006502.8**

(22) Date de dépôt: **23.06.2010**

(54) **Garniture d'interface pour roue de cycle et roue de cycle comportant une telle garniture**

Abdeckring zwischen Felge und Reifen eines Fahrradrades und mit einem solchen Abdeckring ausgestattetes Fahrradrad

Cover ring between rim and tyre of a bicycle wheel and bicycle wheel comprising such a cover

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **22.07.2009 FR 0903617**

(43) Date de publication de la demande:
**26.01.2011 Bulletin 2011/04**

(73) Titulaire: **MAVIC S.A.S.**
**74370 Metz-Tessy (FR)**

(72) Inventeurs:
• **Mercat, Jean-Pierre**
**74650 Chavanod (FR)**
• **Mouzin, Olivier**
**74210 Montmin (FR)**
• **Huat, Francois-Xavier**
**74000 Annecy (FR)**

(56) Documents cités:
**EP-A2- 0 808 728    WO-A1-2008/142422**
**FR-A1- 2 555 106    US-A- 2 573 996**
**US-A- 5 061 013**

**Description**

La présente invention se rapporte à une roue pour cycle comportant une jante et un pneumatique.

Les roues de cycles, sont en général constituées par une partie rigide, la jante, sur laquelle est montée une partie gonflable, le pneumatique. Deux types de pneumatique sont couramment utilisés pour les roues de vélo ; les boyaux et les pneus à tringle, ces derniers étant simplement appelés de façon courante, pneumatique ou pneus. L'invention se rapporte à ces deux types de pneumatique.

L'être humain est limité dans la puissance qu'il peut développer. La vitesse d'avance d'un cycliste est par conséquent limitée. Cette vitesse résulte d'un équilibre entre la puissance développée par le cycliste et les forces de résistance à l'avancement. Les forces de résistance comprennent notamment la résistance au roulement qui est sensiblement indépendante de la vitesse et la résistance aérodynamique, la traînée, laquelle est fonction de la vitesse au carré.

La théorie de l'aérodynamique enseigne qu'aux faibles nombres de Reynolds, plus l'écoulement de l'air, autour de l'objet en déplacement, est laminaire, plus la trainée sera faible. C'est pourquoi, on cherchera à éviter des géométries qui génèrent un décollement des filets d'air, ou en tout cas qui recule au maximum, les limites de décollement.

Dans le cas d'une roue de cycle, notamment d'une roue à rayon, du fait de son caractère annulaire et de ce que sa direction de progression dans l'air est incluse dans son plan de symétrie, la forme du pneu autant que celle de la jante sont déterminant pour la trainée aérodynamique de la roue. En effet, selon la direction de progression de la roue, en ce qui concerne l'avant de roue, le pneu constitue le bord d'attaque de la pénétration dans l'air, et le bord de fuite est sur la jante. En revanche, en ce qui concerne la partie arrière de la roue, le bord d'attaque est sur la jante, et le bord de fuite est sur le pneu.

Plusieurs fabricants ont proposé des modèles de roues qui revendiquent une diminution de la résistance aérodynamique. Par exemple, le document US 5061013 qui forme l'état de la technique selon le préambule de la revendication 1, décrit une roue pour cycle dont le ratio entre la largeur maximale de la jante et la largeur du pneumatique est supérieur à 1. Un autre exemple est constitué par le document FR 2555106 qui décrit la mise en place d'un ruban de ceinturage sur un pneu de façon à centrer celui-ci sur la jante et réduire le coefficient de pénétration aérodynamique.

Toutes ces tentatives n'apportent pas de solution satisfaisante au problème de réduction de la résistance aérodynamique. Souvent, comme on le verra ci-dessous, la trainée aérodynamique est diminuée pour l'une des parties avant ou arrière de la roue, mais pas pour l'autre.

La jante décrite dans le document US 5061013 ne respecte pas la norme de l'ETRTO (European Tyre and Rim Technical Organisation). Notamment, cette norme préconise que pour une jante à boyau, le creux de jante ne doit pas dépasser 4,5 mm. Dans cette jante, le creux de jante est très important et cela aura nécessairement des conséquences soit sur le montage du pneu, soit sur le maintien de ce dernier sur la jante. En effet, dans le cas où le diamètre extérieur est celui d'une jante normalisé, le pneu pourra être facile à monter, mais du fait du creux important, une fois en place au fond de la jante, il sera monté lâche. Dans le cas où c'est le diamètre du fond de la jante qui correspond aux préconisations de l'ETRTO, il sera certainement très difficile, lors du montage, de faire passer le pneu par-dessus les talons de la jante. D'autre part, la roue obtenue sera peu confortable dans la mesure où, du fait du creux de jante important, la course de talonnage sera réduite. Une course de talonnage réduite multiplie les risques de crevaison par écrasement du pneu et pincement de la chambre à air. Pour diminuer ce risque, le concepteur de la roue décrite dans US 5061013 a privilégié le fait d'avoir des bords supérieurs de jante épais et arrondis. L'épaisseur des bords supérieurs de jante a pour conséquence une rupture de continuité de la surface externe de la roue au niveau de l'interface pneu/ jante. Cette rupture de continuité est source de perturbation dans l'écoulement de l'air et donc d'une augmentation de la résistance aérodynamique. Ce sera notamment le cas pour la portion arrière de la roue, c'est-à-dire lorsque le bord d'attaque sera la jante et le pneu, le bord de fuite. En effet, la largeur de la jante est beaucoup plus importante que celle du pneu, ce qui augmente la surface frontale.

Dans le document FR 2555106, on propose de réaliser un ruban de ceinturage pour améliorer la connexion des arêtes de la jante au pneu. Dans cette construction, le rétrécissement de la jante par rapport au pneu a pour conséquence que, en ce qui concerne la portion avant de la roue, la limite de décollement des filets d'air va se trouver entre la zone de plus grande largeur du pneu et la jante, induisant un écoulement perturbé le long des parois latérales de la jante. Le décrochage des filets d'air engendrera une forte dépression à proximité de la largeur maximale du pneu, ce qui entrainera une augmentation de la traînée aérodynamique. Dans la zone du ruban de ceinturage, les filets d'air seront déjà décollés, si bien que cette zone n'a aucun effet sur la diminution de la trainée. En effet, avec ou sans ruban de ceinturage, la roue décrite dans ce document, aura quasiment la même trainée aérodynamique. D'autre part, comme il est décrit dans ce document, le ruban de ceinturage comporte des cordons de lisières pour donner de la consistance à la matière élastique ou plastique qui assure le profil de raccordement. Une telle construction est relativement lourde car elle revient, dans le cas d'un boyau, à équiper celui-ci d'un élément de renfort caractéristique des pneus à tringle, et dans le cas d'un pneu à tringle, à doubler cette structure de renfort. Par conséquent, même si il pouvait y avoir une amélioration de l'aérodynamisme, elle se ferait au détriment du poids de la roue.

L'objectif de la présente invention est de fournir une roue de vélo ayant une faible résistance aérodynamique et ce, quel que soit l'angle d'incidence du vent apparent par rapport à la direction d'avancement du vélo et notamment lorsque l'angle d'incidence est compris entre 0° et 35°.

L'objectif de l'invention est également de fournir une roue de vélo pour laquelle le risque de talonnage est diminué, c'est-à-dire que l'amplitude de déformation radiale du pneumatique jusqu'à ce que celui-ci soit complètement écrasé et que la jante vienne au contact avec le sol, soit maximale.

L'objectif de l'invention est également de fournir une roue de vélo légère.

L'objectif de l'invention est également de fournir une roue pour laquelle le montage du pneumatique, de type "boyau" ou de type "pneu à tringle" est aisé.

L'objectif de l'invention est également de fournir une roue de vélo qui satisfasse aux recommandations de l'ETRTO.

L'objectif de l'invention est également de fournir une roue qui bien qu'elle utilise un pneumatique et/ou une jante courante, diminue sensiblement la trainée aérodynamique

L'objectif de l'invention est atteint par la fourniture d'une roue pour cycle comportant une jante et un pneumatique; ladite jante étant constituée par un corps de révolution dont la section comporte une partie principale et une partie périphérique qui est placée, radialement, à l'extérieur de ladite partie principale et qui comporte une cavité annulaire dans laquelle est reçu partiellement ledit pneumatique; la surface externe de ladite roue étant constitués par les portions du pneumatique et de la jante qui font face à l'extérieur de la roue; la roue comprenant en outre une garniture d'interface placée au contact de la jante et du pneumatique, ladite garniture d'interface constituant une portion intermédiaire de ladite surface externe de la roue et ladite garniture étant une pièce déformable et distincte du pneumatique et de la jante.

Selon des aspects avantageux mais non obligatoires de l'invention, une roue peut incorporer une ou plusieurs des caractéristiques techniques suivantes, prises dans toute combinaison techniquement admissible :

- La largeur, L, de la partie principale étant supérieure à la largeur, S, du pneumatique, lorsque ce-dernier est à l'état gonflé.
- La garniture d'interface vient se placer dans une gorge (15) dont une paroi latérale est une portion de la surface extérieure du pneumatique (2) et l'autre paroi latérale est une portion de la surface extérieur de la jante (3), et au moins 40%, de préférence au moins 50%, du volume de la garniture d'interface est constitué par un espace creux.
- La garniture d'interface s'étend sensiblement entre un cercle intérieur C1 d'axe A et de diamètre $D_1$ et un cercle extérieur C2 d'axe A et de diamètre $D_2$, ledit diamètre $D_2$ étant supérieur au diamètre extérieur de la roue, D, diminuée des quatre-tiers de la largeur, S, du pneu à l'état gonflé: $D_2 > D - (4/3) \times S$.
- Le profil en section surface extérieure de la garniture d'interface est une portion de courbe dont le rayon de courbure, p, est toujours supérieur à la largeur, S, du pneu à l'état gonflé.
- La hauteur, h, de la garniture d'interface est supérieure à 25% de la largeur, S, du pneu à l'état gonflé.
- La garniture d'interface comprend un anneau, et un espace creux ménagé entre ledit anneau et le pneumatique.
- La garniture d'interface comprend deux anneaux, chacun des deux anneaux étant fixés sur l'un des deux cotés de la roue.
- Selon une section plane passant par l'axe de la roue, l'espace creux a une superficie comprise entre 5 et 25 mm$^2$.
- Les anneaux de la garniture d'interface sont réalisés dans un matériau dont la densité est inférieure à la densité du matériau principal de la jante.
- Les anneaux de la garniture d'interface sont réalisés dans un matériau dont la densité est inférieure à 1,2, de préférence inférieure à 1,1
- Les anneaux de la garniture d'interface sont réalisés dans un matériau de type mousse dont la densité est inférieure à 0,4.
- Le pneumatique comporte des talons, la jante comporte des crochets prévus pour retenir les talons et en ce que la garniture comprend un rebord pincé entre ladite tringle et ladite jante.
- La garniture comprend un contre-talon qui s'intercale entre le pneu et la jante et contre lequel, le talon du pneu prend appui.
- Les anneaux sont collés sur la jante et/ou sur le pneumatique.

L'objectif de l'invention est également atteint par la fourniture d'un anneau prévu pour être monté à l'interface d'un pneumatique et d'une jante de roue de vélo, comprenant des moyens de fixation à la jante ainsi qu'une lèvre dont la hauteur, h, est au moins deux fois supérieure à son épaisseur, e.

De préférence, l'anneau est déformable de façon à ce que l'extrémité libre de ladite lèvre soit précontrainte pour venir en appuis sur la pneumatique.

Dans un mode de réalisation de l'invention, les moyens de fixation de l'anneau à la jante sont constitués par la déformation d'une portion de celui-ci de façon à "clipser" l'anneau sur la jante.

D'autres caractéristiques et avantages de l'invention se dégageront de la lecture de la description qui va suivre en regard des dessins annexés qui ne sont donnés qu'à titre d'exemple non limitatif.

La figure 1 est une vue en perspective d'une roue selon un premier mode de réalisation de l'invention.

La figure 2 est la section partielle de la roue de la figure 1 en cours d'assemblage.

La figure 3 est une vue similaire à la figure 2, lorsque la garniture d'interface est mise en place.

La figure 4 est une vue en perspective de la garniture d'interface.

La figure 5 est une section d'une roue selon une variante du premier mode de réalisation de l'invention.

La figure 6 est une section d'une roue selon un deuxième mode de réalisation de l'invention.

La figure 7 est une section d'une roue selon un troisième mode de réalisation de l'invention.

La figure 8 est une section d'une roue selon un quatrième mode de réalisation de l'invention.

La figure 9 est une section d'une roue selon un cinquième mode de réalisation de l'invention.

La figure 10 est une section d'un anneau selon un troisième mode de réalisation de l'invention.

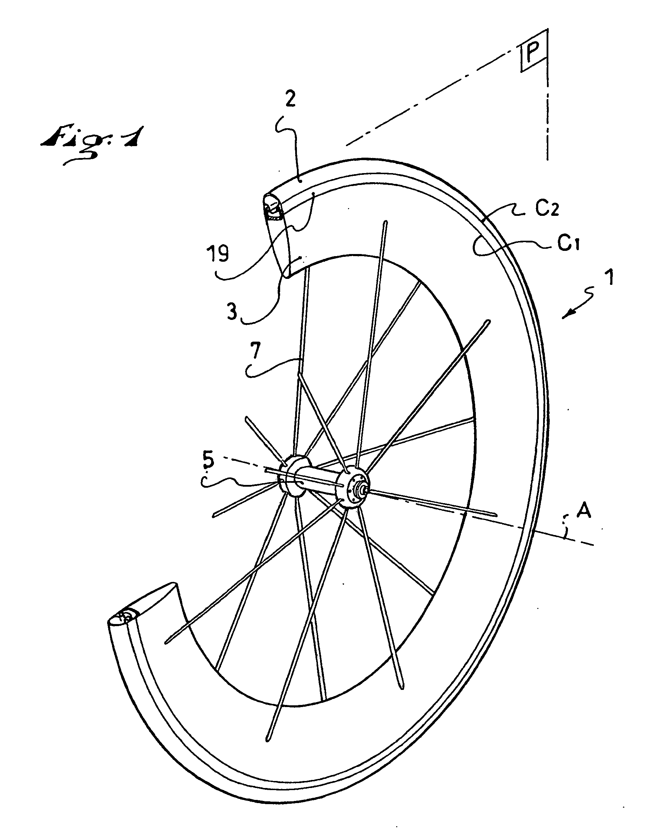

La figure 1 donne une vue d'ensemble d'une roue 1 selon l'invention. La roue 1 comprend une jante 3, un moyeu 5 et des rayons 7 reliant la jante au moyeu. La roue 1 dispose d'un axe A de révolution, autour duquel elle sera montée rotative sur le cadre de vélo, et un plan de symétrie P, perpendiculaire à l'axe A. Le diamètre total de la roue, D, c'est-à-dire le diamètre extérieur du pneumatique lorsque ce dernier est monté sur la jante et gonflé à la pression recommandée, est sensiblement compris entre 600 mm et 680 mm. On appelle surface externe de la roue, l'ensemble des portions de tous les composants de la roue qui font face à l'extérieur de celle-ci et qui, par conséquent, sont au contact de l'écoulement d'air lors de son utilisation.

Bien qu'on représente ici une roue à rayon, il est entendu que l'invention ne se limite pas à ce type de roue. D'ailleurs, on ne détaillera pas dans cette présentation les type de rayons utilisés, ni leur fixation à la jante et au moyeu.

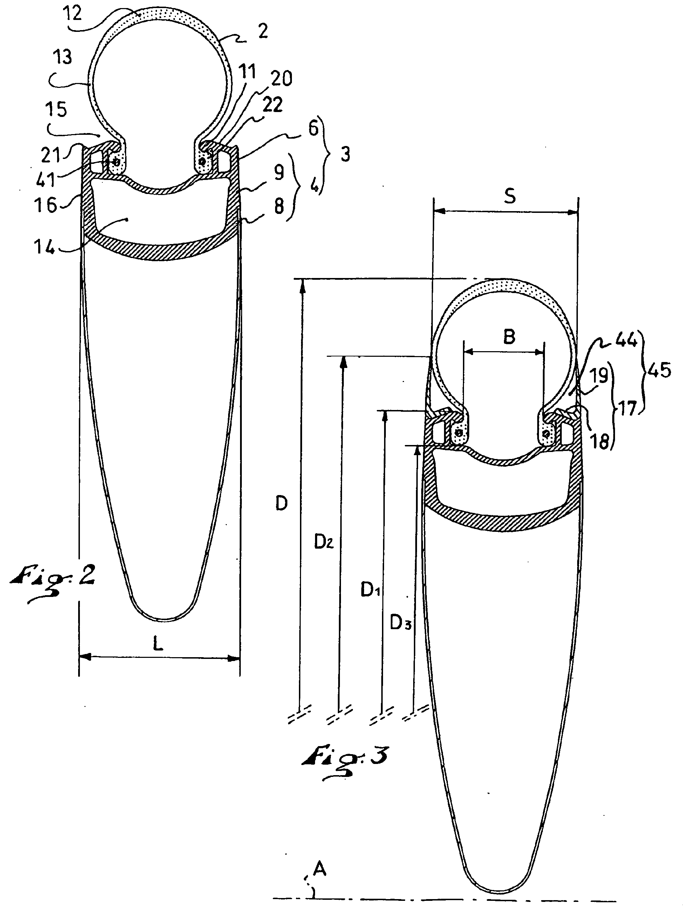

La figure 2 montre le profil partiel de la roue en cours d'assemblage selon un premier mode de réalisation de l'invention. Il s'agit d'une roue de diamètre total D, compris entre 660 mm et 680 mm. La jante 3 est réalisée par extrusion d'un profilé métallique, par exemple d'un alliage d'aluminium, lequel est coupé et cintré de façon à lui donner une forme annulaire. La jante 3 comporte une partie principale 4 et une partie secondaire 6, prévue pour recevoir le pneumatique 2. La partie principale 4 de la jante est constituée par la partie basse d'un profilé aluminium 9 et d'un flasque 8 en matériau composite collé sur la partie basse des parois latérales du profilé 9. La réalisation de la jante telle que décrite ici n'est qu'un choix parmi bien d'autres possibilités et on pourra envisager de mettre en oeuvre l'invention avec des jantes entièrement réalisée, en matériau composite, en matériau métallique, en matière plastique ou en toute combinaison de ces matériaux et d'autres.

La roue comprend un pneumatique 2 dont les talons 22 sont maintenus entre les crochets 11 de la jante 3. Le talon 22 du pneumatique comprennent chacun une tringle 41 de rigidification. Le pneumatique comprend une bande de roulement 12, susceptible de venir au contact du sol (route, piste). La bande de roulement 12 et les talons 22 sont séparés par des flancs 13. En section, la forme externe du pneumatique est sensiblement circulaire. A l'état gonflé, le pneumatique a une largeur, S, qui est égale 23 mm ± 0,5.

Le profilé 9 comprend un caisson creux 14 surmonté de la structure en U que constitue la partie périphérique 6 de la jante 3. La structure en U est fermée par deux crochets 11 dont la fonction est de retenir les talons 22 du pneu 2. L'écartement entre les deux crochets, B, est égal à 12,7 mm. Conformément aux préconisations de la norme ETRTO, cette jante 13C pourra recevoir des pneumatiques de largeur S comprise entre 18 mm et 25 mm.

Les parois latérales 16 de la jante sont deux surfaces tronconiques placées de chaque coté, et qui fond avec le plan de symétrie, P, de la roue un angle relativement faible, par exemple 2. Lorsque la roue sera montée sur un vélo et en phase de freinage, ces parois latérales seront en contact avec les patins de frein. Bien entendu, il s'agit là d'une caractéristique non limitative de l'invention, en effet on pourra envisager que ces surfaces latérales soient coplanaire du plan de symétrie, ou avec une courbure évolutive ou encore que l'invention soit mise en oeuvre pour des roues à freinage à disque ne nécessitant pas une géométrie particulière des parois latérales de la jante.

La largeur maximale de la jante, L, se situe sensiblement au sommet de la partie principale 4 de celle-ci, au voisinage de la partie périphérique 6. Cette largeur est légèrement plus importante que la largeur du pneumatique, S.

La figure 2 représente en coupe une roue en cours d'assemblage. La zone d'interface entre les surfaces externes de la jante 3 et du pneu 2 définie une gorge annulaire 15 de chaque coté de la roue. Cette gorge 15, est définie par ses deux parois latérales. La première de ces parois latérales est une portion de la surface extérieure du pneumatique tandis que la deuxième de ces parois latérales est une portion de la surface extérieure de la jante. Comme on peut le voir, dans cette état, la surface externe de la roue comprend, de chaque coté, au niveau de la zone d'interface jante/pneu, une profonde échancrure qui aurait un effet néfaste sur la trainée aérodynamique de la roue.

La figure 3 montre comment, conformément à l'invention, la mise en place d'une garniture d'interface modifie considérablement la surface externe de la roue. La garniture d'interface est constituée par le comblement de la gorge 15. Elle comprend une pièce intermédiaire entre la jante et le pneu qui est distincte de ces-derniers. La roue étant symétrique par rapport à son plan principal, la garniture d'interface comprend une paire d'anneau circulaire 17, chacun comblant l'une des gorges 15, la section de chacun des anneaux 17 ayant sensiblement le profil d'un "V". La garniture d'interface comprend également des espaces vides fermés qui séparent sur la plus grande partie de sa hauteur l'anneau 17 de la surface extérieure du pneumatique.

L'anneau 17 comprend une base 18, et une lèvre 19. La lèvre 19 est constituée d'une portion annulaire sensiblement plane, ou pour être plus précis, sensiblement tronconique à angle au sommet voisin de 180°, sensiblement orientée selon le plan de symétrie P. Le diamètre intérieur de la lèvre est égal à 633 mm ce qui correspond plus ou moins au diamètre extérieur, $D_1$, de la jante 3, lequel vaut 631 mm. Son diamètre extérieur, $D_2$, est quant à lui supérieur à 636 mm, et dans le mode de réalisation représenté égal à 650 mm.

Lorsqu'il est en place sur la roue (cf. fig. 1), l'anneau 17 constitue une portion intermédiaire de la surface externe de la roue qui s'étend entre deux cercles d'axe A. Le cercle intérieur C1, a un diamètre sensiblement égal au diamètre extérieur de la jante, tandis que le cercle extérieur C2 a un diamètre égal à $D_2$.

La base 18 repose sur le profilé 9, au niveau des crochets 11, sur une surface tronconique 20. Elle est retenue sur cette surface par un becquet 21. La lèvre 19 fait saillie depuis la base 18 dans la zone externe de celle-ci et se prolonge jusqu'au contact avec le pneumatique 2. En section, le profil extérieur de la lèvre 19 est une portion de courbe dont le rayon de courbure est toujours supérieur à la valeur de la largeur, S, du pneumatique.

L'anneau 17 est réalisé dans une matière plastique, par exemple dans un élastomère thermoplastique (TPE) ou dans un polyether bloc amide (PEBA). Des matières pouvant convenir pour la réalisation de l'anneau 17 incluent, de manière non limitative, Pebax, Hytrel, Keflex, caoutchouc, silicone. La matière choisie, ainsi que la forme de l'anneau favorise sa déformation élastique. Le caractère déformable de l'anneau est utilisé, d'une part, pour la mise en place de celui-ci dans la gorge 15 par clipsage et, d'autre part, pour ne pas gêner la déformation du pneu au cours de l'utilisation de la roue. On notera que lors d'une très forte compression du pneu, dans laquelle la portion du pneu subissant le choc s'écrase et s'aplatit complètement pourrait générer une déformation importante de l'anneau 17, par exemple l'ouverture de la forme en "V", sans dommage irréversible de celui-ci.

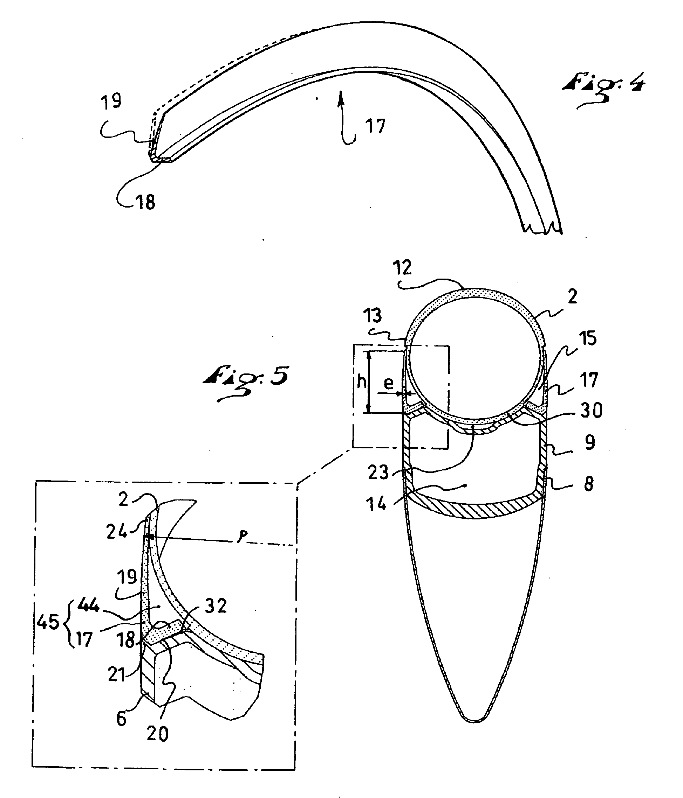

L'angle que fait le becquet 21 avec la surface 20 permet de pré-contraindre axialement l'anneau 17, de façon que l'extrémité haute 24 de la lèvre 19 vienne se plaquer contre le pneumatique. Cet angle est légèrement plus petit que l'angle que font entre elles la base 18 et la lèvre 19 avant la mise en place de l'anneau sur la roue. La figure 4 qui montre l'anneau 17 avant que celui-ci ne soit mis en place entre la jante et le pneu, illustre cette différence en représentant en pointillé la position de la lèvre une fois l'anneau en place. D'autre part, comme on peut le voir sur le zoom de la figure 5, il y a un certain jeu 32 entre la surface tronconique 20 et le bord libre de la base 18. Le placage de l'extrémité haute 24 de la lèvre 19 contre le pneumatique résulte en partie de l'effet de pivotement de l'anneau autour de la zone de jonction entre la base 18 et la lèvre 19.

L'anneau est également précontraint radialement en traction, dans la mesure où son diamètre avant montage est plus petit de celui qu'il a une fois en place sur la jante. On obtient de bon résultats avec une précontrainte correspondant à une variation du diamètre supérieure à 1 % et de préférence comprise entre 1 et 5%

La lèvre 19 constitue une portion annulaire flexible de l'anneau 17 dont l'extrémité extérieure, selon une direction radiale, c'est-à-dire l'extrémité haute 24, est apte à se déplacer suivant une direction sensiblement orientée selon l'axe A. La déformation par flexion est rendue possible notamment par le fait que la hauteur, h, de la lèvre est plus importante que son épaisseur, e, notamment plus importante que 2 fois l'épaisseur, de préférence plus importante que 3 fois l'épaisseur, e.

Cela étant dit, pour des raisons de légèreté de la roue, et dépendamment des caractéristiques intrinsèque du matériau choisi pour réaliser l'anneau 17, on privilégiera une épaisseur, e, pouvant atteindre la hauteur, h, divisée par 5. Dans le cas d'espèce, la lèvre 19, dont la hauteur, h, se mesure depuis l'endroit où la lèvre se sépare de la base 18 jusqu'à l'extrémité haute 24 est supérieure à 15 % de la valeur S, de préférence supérieur à 25 %. Dans le cas d'espèce, la hauteur, h, mesure environ 10 mm et l'épaisseur, e, mesurée à équidistance de l'extrémité haute et de la base, est égale à 0,5 mm.

Des raisons de légèreté de la roue complète font qu'il est préférable de choisir, pour l'anneau, un matériau dont la densité est inférieure à 1,2, de préférence inférieure à 1,1. De cette façon l'anneau a une densité largement inférieure à celle de la jante, que cette dernière soit réalisée en alu (densité 2,7) ou en carbone (densité 1,6), mais également à celle du pneumatique, laquelle peut atteindre 1,4.

D'autre part, la superficie de la section de l'anneau est petite au regard de la superficie de la section de la gorge 15. D'ailleurs, l'espace vide ou espace creux 44 délimité par la base 18, la lèvre 19 et la partie basse du flanc du pneu est relativement conséquent. Dans l'exemple représenté, la superficie de la section de l'anneau 17 vaut environ 11 mm$^2$ tandis que la superficie de la section de l'espace creux 44 vaut environ 15 mm$^2$. Si on défini le volume de la gorge 15 comme étant le volume destiné à être comblé par la garniture d'interface, on a dans cet exemple, un anneau 17 qui comble 42% du volume de la gorge 15, l'espace creux 44 représentant 58% du volume comblé.

On préférera la terminologie espace creux, plutôt qu'espace vide, pour définir l'espace fermé défini par l'anneau 17, la jante 3 et le pneumatique 2, car s'il est vide de la matière constituant l'anneau, il est rempli d'air.

L'espace creux 44 permet un gain de poids de la garniture d'interface et ainsi de la roue entière. Dépendamment de la forme de l'anneau, de la profondeur de la gorge 15 et de la densité du matériau choisi pour la fabrication de l'anneau, on privilégiera un espace creux 44 de dimension suffisante pour que ses effets soient notables. Notamment on dimensionnera le profil de la section de l'anneau 17 de telle manière que la superficie de la section de l'espace vide (creux) 44 soit comprise entre 5 et 25 mm$^2$. Ces valeurs sont notamment données pour des roues de diamètre 622 mm. De manière plus générale, on dimensionnera l'anneau 17 de façon que l'espace vide 44 corresponde à au moins 40%, et de préférence à au moins 50% du volume de la gorge 15 comblé par la garniture d'interface.

L'espace creux 44, permet de séparer sur une grande partie de sa hauteur, la lèvre 19 de la surface extérieure du pneumatique, seule l'extrémité haute étant en contact. Ainsi, l'anneau 17 n'offre aucune résistance à la déformation du pneumatique.

Dans l'exemple décrit, le matériau choisi pour l'anneau est un élastomère thermoplastique commercialisé sous la marque PEBAX 40-33 de densité 1,1. Ce qui donne un anneau dont le poids est environ de 21 g. On comprend donc que les deux anneaux 17 augmentent peu le poids total de la roue. En règle générale, cette augmentation sera comprise entre 10 et 100 g. Comparé aux poids d'un ensemble pneumatique + chambre à air, et au poids d'une jante, le poids d'une paire d'anneaux 17 représente entre 5% et 20% du premier et entre 5% et 30% du deuxième.

Dans l'exemple décrit les anneaux et les espace creux sont axisymétrique, c'est-à-dire qu'ils sont des corps de révolution. On pourra envisager de placer des nervures (non représentées) qui rejoignent lèvre 19 et base 18 et qui, de ce fait, divisent l'espace creux 44 en une pluralité de espaces creux de plus petites dimensions.

Dans une variante du premier mode de réalisation de l'invention, l'anneau est réalisé en deux ou plusieurs matières, une matière pour la base et une autre pour la lèvre.

Dans une autre variante non représentée, la base est équipée d'une tringle ou d'un renfort pour garantir une meilleur tenue de celle-ci sur la jante.

La lèvre 19 constitue une portion de la surface externe de la roue qui assure l'interface entre la jante 3 et le pneumatique 2, qui contribue à réduire sa résistance aérodynamique.

Le diamètre $D_2$, qui correspond à l'extension radiale maximale de la lèvre 19 sur le pneu est relativement important, de sorte que la lèvre repose sur les flancs du pneu à proximité de la zone de plus grande largeur de celui-ci. En pratique, $D_2$ est supérieur au diamètre extérieur de la roue, D, diminuée des quatre-tiers de la largeur du pneu à l'état gonflé, S:

$$D_2 > D - (4/3) \text{ x } S.$$

Dans le cas où la roue est prévue pour un freinage sur jante, le diamètre intérieur $D_1$ de la garniture d'interface est supérieur au diamètre intérieur $D_3$ du pneumatique, lequel étant constitué par le diamètre de repos des talons du pneumatique sur la jante. Ainsi, l'extension de l'anneau, vers le centre de la roue, est limitée et l'anneau ne vient pas s'étendre dans la zone de freinage.

Dans le cas où la roue est prévue pour un freinage à disque, on pourra prévoir que l'extension vers le centre de la roue de l'anneau soit plus importante.

La roue décrite dans le premier mode de réalisation est équipée d'une jante de 622, c'est-à-dire que le diamètre ETRTO de la surface recevant les talons du pneumatique fait 622 mm. Dépendamment des dimensions du pneumatique monté sur la jante, lequel peut, par exemple, avoir une largeur comprise entre 18 et 25 mm, le diamètre extérieur de la roue, D, est compris entre 660 et 680 mm. Le diamètre $D_2$, correspondant à au diamètre extérieur de l'anneau est alors supérieur à 630 mm. Il s'agit bien entendu de valeurs données à titre d'exemple. D'autres valeurs sont rassemblées dans le tableau -1-, notamment pour les jantes de 571.

Tableau -1-

| Jante (mm) | 622 | | | 571 | | |
|---|---|---|---|---|---|---|
| Pneu - S (mm) | 18 < S < 25 | | | 18 < S < 25 | | |
| Roue - D (mm) | 660 < D < 680 | | | 600 < D < 620 | | |
| | S = 18 | ... | S = 25 | S = 18 | ... | S = 25 |
| Anneau - $D_2$ (mm) | $D_2 > 636$ | ... | $D_2 > 648$ | $D_2 > 576$ | ... | $D_2 > 588$ |
| Anneau - h (mm) | h > 4 | ... | h > 6 | h > 4 | ... | h > 6 |

La figure 5 montre la section partielle d'une roue selon une variante du premier mode de réalisation de l'invention. Dans cette variante, la roue est équipée d'un pneumatique de type boyau. Le pneumatique est fixé par collage sur la partie périphérique de la jante. La portion de pneumatique qui est collée sur la jante est appelée socle 30 du pneumatique Le pneumatique comprend une bande de roulement 12, susceptible de venir au contact du sol (route, piste). La bande de roulement 12 et le socle 30 sont séparés par des flancs 13. En section, la forme externe du pneumatique est sensiblement circulaire. A l'état gonflé, le pneumatique a une largeur, S, qui est égale 23 mm $\pm$ 0,5. Des pneumatiques ayant d'autres dimensions pourront être utilisés, notamment des pneumatiques dont la largeur est comprise entre 18 mm et 25 mm.

La jante 3 comporte une partie principale 4 et une partie périphérique 6, prévue pour recevoir le pneumatique 2. La partie principale 4 de la jante est constituée par la partie basse d'un profilé aluminium 9 et d'un flasque 8 en matériau composite collé sur la partie basse des parois latérales du profilé 9. Le profilé 9 comprend un caisson creux 14, à la surface extérieure duquel est ménagée la cavité annulaire 23 dans laquelle est reçu partiellement le boyau.

La cavité annulaire 23 est bordée de chaque coté par des surface tronconiques 20, sur lesquelles reposent les anneaux 17. Les anneaux 17 sont similaires à ceux montrés aux figures 1 à 4. On se contentera ici d'en faire une description succincte.

Après avoir collé le boyau sur la jante, on viendra mettre en place les anneaux 17 à l'interface entre jante et boyau. La base 18 est placée contre la surface tronconique 20 et est retenue en place par la présence du becquet 21. L'anneau est précontraint pour s'assurer que l'extrémité haute 24 de lèvre vienne bien se plaquer contre le flanc 13 du pneumatique.

Le diamètre extérieur de la jante est celui d'une des valeurs préconisées par la norme ETRTO. Dans le cas d'espèce, ce diamètre est égal à 633 mm. Le boyau collé sur la jante a une largeur comprise entre 17 et 26 mm, de préférence dans le cas d'espèce sensiblement égal à 23 mm. Le diamètre de la roue, D, est sensiblement égal 680 mm et le diamètre extérieur de l'anneau (diamètre de l'extrémité haute de la lèvre), $D_2$, est supérieur à 648 mm.

De préférence, notamment pour une roue à freinage sur jante, le diamètre intérieur de l'anneau $D_1$ est supérieur au diamètre intérieur du boyau $D_3$.

Pour s'assurer une meilleure stabilité des anneaux 17 dans les gorges 15, on pourra préalablement à leur montage sur la roue, procéder à une opération de laminage de la partie haute de la lèvre 19. Le laminage est réalisé par passage de la partie haute de la lèvre entre deux rouleaux et a pour conséquence de générer un allongement de 5 à 6% de l'extrémité haute de la lèvre. Si on montait un anneau non modifié par laminage sur la roue avec une certaine précontrainte, cette précontrainte déjà présente dans la partie basse de la lèvre 19, et la base 18 irait en s'accroissant dans la partie haute de la lèvre au fur et à mesure qu'on approche de l'extrémité haute 24 de celle-ci, du fait de l'augmentation du rayon de courbure. Grâce à l'allongement de la partie haute de la lèvre 19 dans un anneau modifié, une fois montée, la précontrainte en traction à laquelle est soumise l'extrémité haute 24 de la lèvre, est pratiquement nulle.

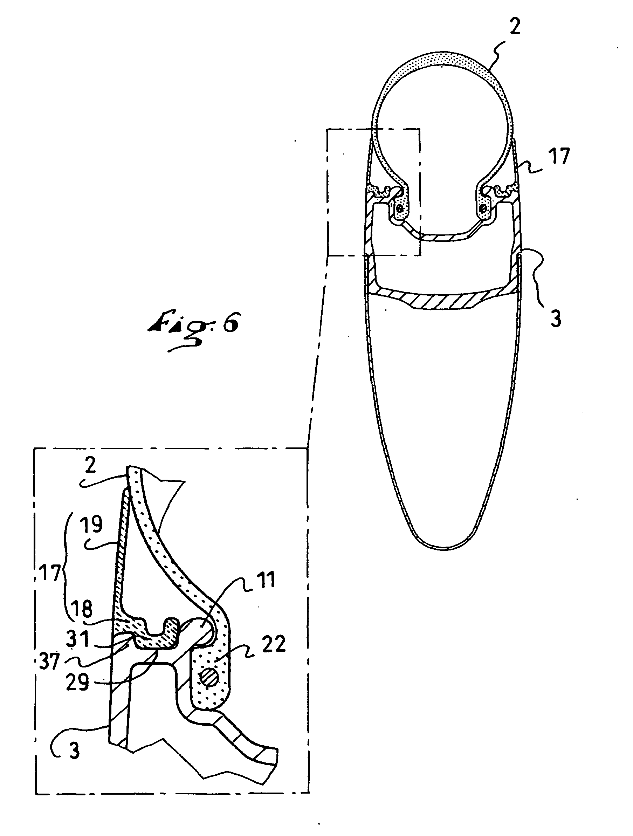

Dans les deuxième, troisième, quatrième, cinquième et sixième modes de réalisation de l'invention représentés respectivement aux figures 6, 7 et 8, les éléments analogues à ceux du premier mode de réalisation portent les mêmes références. Dans ce qui suit, on décrit principalement ce qui distingue ces modes de réalisation du précédent. A défaut de mention contraire, les éléments constitutifs de la roue de vélo des modes de réalisation sont identiques et fonctionnent comme ceux du premier mode de réalisation.

La figure 6 montre un deuxième mode de réalisation de l'invention qui se différencie du premier mode par le fait que l'anneau 17 est maintenu sur la plage 26 de la jante 3 par "clipsage".

La partie périphérique 6 de la jante qui reçoit la base 18 de l'anneau 17 comprend une zone en dépression 29, entre le talon de la jante 37 et le crochet 11. La base 18 est conçue avec une portion saillante 31 de forme complémentaire à cette zone en dépression qui vient s'emboiter dans cette dernière.

La portion saillante 31 est de dimension légèrement supérieure à celle de la zone en dépression qui la reçoit. Cependant, du fait du caractère déformable de l'anneau 17, la fixation de l'anneau sur la jante est réalisée lorsque la portion saillante se déforme élastiquement pour être retenue dans la zone en dépression.

Le "clipsage" de l'anneau sur la roue pourra être défait avec un ou des outils adéquats, par exemple, avant le démontage du pneu.

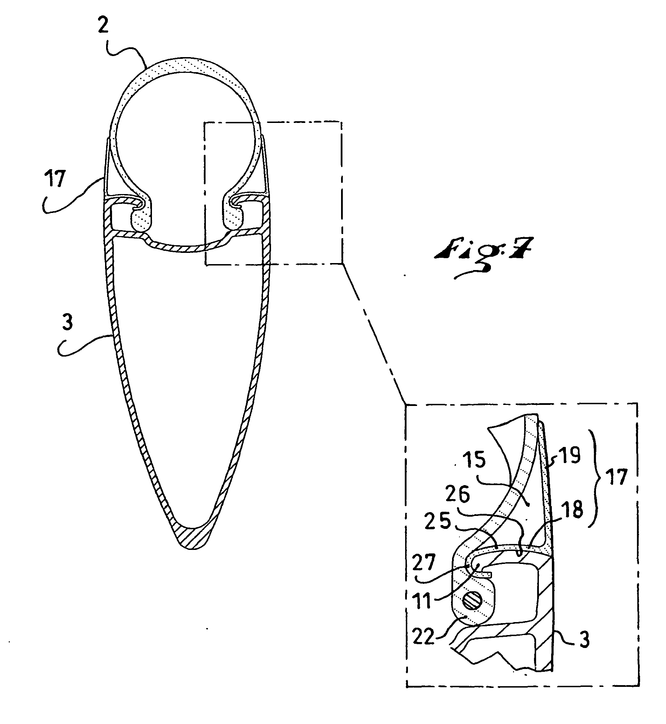

A la figure 7, comme dans le premier mode de réalisation, le pneumatique 2 est retenu sur la jante 3 par blocage des talons 22 du pneu sous les crochets 11 de la jante.

Chacun des crochets 11 est positionné à l'extrémité d'une plage 26 issue du sommet des parois latérales de la jante. Les plages 26 sont des portions approximativement cylindriques d'axe A. Bien entendu, comme on peut le voir à la figure 6, les plages 26 ne sont pas des surfaces cylindriques. Cependant, ce sont des surfaces de révolution que l'on peut considérer comme sensiblement cylindriques d'axe A, dans la mesure où, elles sont orientées selon l'axe A.

Un anneau 17 est placé de chaque coté, de façon à refermer et combler la gorge 15 constituée par a zone d'interface entre le pneu et la jante. L'anneau 17 comprend une base 18 assurant le positionnement de l'anneau à la périphérie de la jante 3, ainsi qu'une lèvre 19 qui constitue une portion de la surface externe de la roue.

La base 18 de l'anneau 17 comprend une portion approximativement cylindrique 25 d'axe A qui se plaque contre la plage 26 de la jante 3 ainsi qu'un rebord 27 recourbé. Le rebord recourbé 27 enveloppe le crochet 11 jusqu'à passer sous celui-ci. Le rebord 27 a pour fonction de retenir l'anneau 17 par pincement entre la jante et le pneu.

Tout ce qui a été décrit plus haut sur l'anneau du premier mode de réalisation, dimension, diamètre, épaisseur, montage en précontrainte, etc... s'applique également pour l'anneau 17 décrit à la figure 7.

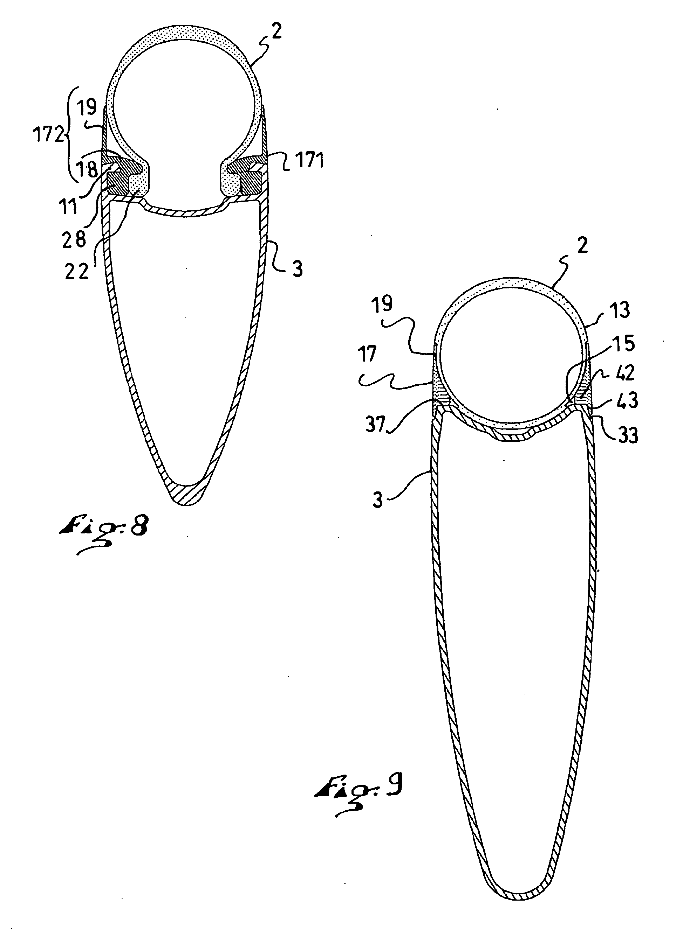

La figure 8 décrit un quatrième mode de réalisation de l'invention qui se rapproche du mode de réalisation précédent en ce que l'anneau 17 assurant l'interface entre le pneu 2 et la jante 3 est retenu par coincement entre le talon 22 du pneu et le crochet 11. Cependant, alors que dans le troisième mode de réalisation, l'anneau se monte, de manière supplémentaire, sur une jante normalisée non modifiée, c'est-à-dire pouvant également recevoir uniquement le pneu seul sans anneau ; dans le quatrième mode de réalisation, la présence de l'anneau est obligatoire pour un bon montage du pneu.

L'anneau 17 de la figure 8, ne comporte plus un rebord recourbé, mais un contre-talon 28 situé sous la base 18 qui fait office d'entretoise entre le crochet 11 et le pneu.

Pour le troisième et le quatrième mode de réalisation de l'invention, l'assemblage de la roue nécessite de faire certaines opérations selon un ordre défini, lequel sera décrit dans les lignes qui suivent.

Dans un premier temps, on positionne l'un de deux anneaux 17, par exemple l'anneau de droite 171, contre le crochet 11 correspondant. Dans un deuxième temps, on rentre le talon droit du pneu dans la jante 3, en s'assurant que le talon gauche du pneu reste en dehors de la jante. Dans un troisième temps, on fait pénétrer la chambre à air (non représentée) à l'intérieur du pneu en la glissant entre le talon gauche et la paroi latérale gauche de la jante. Dans un quatrième temps, on insert le talon gauche du pneu dans la jante. Dans un cinquième temps, on presse sur le talon gauche selon une direction axiale de façon à le faire se rapprocher du talon droit. Ce faisant, il se créé un interstice entre le talon gauche et le crochet dans lequel, au cours d'un sixième temps, on glisse l'anneau gauche 172. Lors du septième et dernier temps on gonfle la chambre à air et on vérifie l'adéquation du montage de l'ensemble.

Le démontage procède de manière similaire, en renversant l'ordre des différentes étapes.

La figure 9 décrit un cinquième mode de réalisation dans lequel la garniture d'interface est constituée par deux anneaux 17 qui sont collés à l'interface entre le pneumatique et la jante.

La jante décrite à la figure 9 est une jante prévue pour recevoir un pneumatique de type boyau. On ne détaillera pas plus dans la suite de cet exposé, la description de cette jante, celle-ci pouvant être réalisée de toute manière connue et notamment d'une des manières précédemment décrite pour les modes de réalisation précédents. Il est cependant à noter que les talons 37 de la jante, c'est-à-dire les deux arêtes latérales supérieures de la jante 3, sont équipés chacun d'un logement circulaire 33.

Chacun des anneaux 17 comprend une portion centrale 42, relativement épaisse, qui vient se caler dans la gorge annulaire 15 définie par l'interface pneu/jante. Au dessus de cette portion centrale 42, en direction de l'extérieur de la roue, l'anneau 17 s'affine jusqu'à devenir une fine lèvre 19 d'environ 0,5 mm d'épaisseur. Au dessous de cette portion centrale, l'anneau 17 se prolonge par un joint 43 dont le profil est sensiblement complémentaire du profil du logement 33.

L'anneau 17 étant assez épais, il sera idéalement réalisé dans une mousse expansée à basse densité, par exemple une densité inférieure à 0,3.

La surface extérieure de l'anneau 17 constitue la surface externe de la roue, et une jonction la plus "tendue" possible, entre le flanc 13 du pneu, dans la zone de plus grande largeur de ce dernier, et le talon 37 de la jante. Par jonction "tendue", on entend que le rayon de courbure, p, de la surface extérieure de l'anneau est relativement important et de toute façon au moins supérieur à la largeur S du pneu. Dans le cas d'espèce, le rayon de courbure de la surface extérieure de l'anneau dans la portion centrale est environ égal à 1m. En pratique, on obtient de bons résultats avec un rayon de courbure supérieur à 0,3 m.

Les anneaux 17 sont collés contre les flancs du pneu après que celui-ci ait été monté et collé sur la jante. On pourra éventuellement envisager de coller les anneaux également sur la jante.

Le choix d'un matériau de type mousse qui comble presque entièrement la gorge 15 permet de réaliser un anneau 17 très léger. De plus, le caractère très souple de la mousse n'empêche pas le pneu de se déformer latéralement. En fait, la mousse étant constituée d'une multitude d'alvéoles creuses, les caractéristiques de l'anneau décrit à la figure 9 sont équivalentes à celles d'un anneau fait de matériaux plein délimitant un espace creux conséquent tel que ceux décrits aux figures 3 à 8. De préférence, on choisira une mousse alvéolaire dont au moins 40%, de préférence au moins 50%, du volume est constitué par les espaces vides ou creux des alvéoles. Par exemple on pourra choisir des mousses de type PVC, PU ou encore de type Rohacell® dont les densités varient entre 0,03 à 0,4.

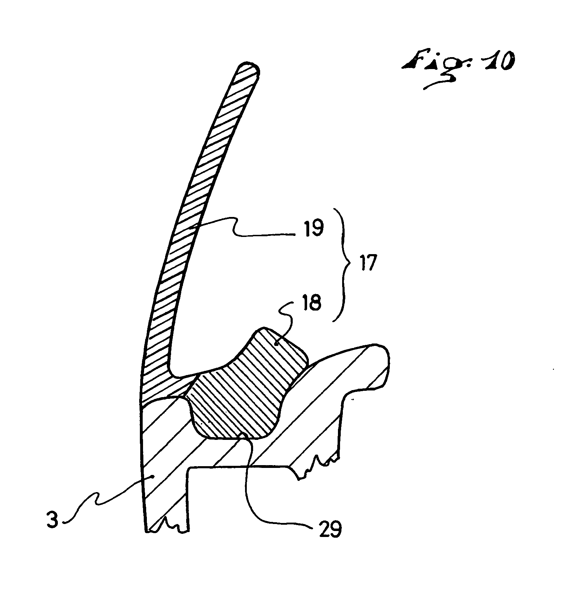

La figure 10 représente une section d'un anneau 17 selon un sixième mode de réalisation. La figure représente partiellement la jante 3 mais ne représente pas le pneu, si bien que la forme de la lèvre 19 ne correspond pas exactement à la forme qu'elle prendra quand le pneu sera en place et gonflé à la pression d'utilisation recommandée.

La base 18 est massive en comparaison avec la lèvre 19, ce qui a pour effet de rapprocher le centre de gravité de l'anneau 17 du centre de la roue. De plus, la partie basse de la base 18 est encastrée dans une zone ou dépression 29 ménagée sur la jante 3. Ces caractéristiques concourent à accroître la stabilité du positionnement de l'anneau 17 sur la jante 3.

La base 18 est réalisée dans un premier matériau et la lèvre 19 est réalisée dans un autre matériau. Cette construction bi-matière de l'anneau 17 autorise une combinaison infinie de matériaux de façon à obtenir différents avantages, différents couleurs, différents états de surface, collage de la base 18 et de la lèvre 19, soudure ou surmoulage.

Un choix particulièrement judicieux consiste à coextruder deux matériaux ayant des modules d'élasticité différents. Bien entendu, les deux matériaux doivent avoir une compatibilité pour autoriser la coextrusion. Par exemple, on choisit un matériau plus rigide pour la base 18 afin d'assurer un bon encastrement sur la jante par un frettage énergique et un matériau plus souple pour la lèvre 19 de façon à ce que cette dernière dispose d'une bonne élasticité. Un tel couple de matériaux est constitué par un PEBAX 5533 de module 150 Mpa pour la base 18 et un PEBAX 3533 de module 15 Mpa pour la lèvre 19.

L'anneau 17 de la figure 10 est réalisée par coextrusion du PEBAX 5533 pour la base 18 et du PEBAX 3533 pour la lèvre, se révèle particulièrement stable lorsqu'il est en place sur la jante, même lorsque la déformation latérale du pneu induit une ouverture vers l'extérieur de la partie haute de la lèvre 19. Du fait du rapport 10 entre les modules des deux matériaux, la précontrainte de la base 18, souhaitable pour l'encastrement stable de celle-ci dans la jante, n'entraînera pas ou peu de précontrainte au niveau de la partie haute de la lèvre 19. Bien entendu, si on veut réduire encore la précontrainte résiduelle dans la partie haute de la lèvre 19 après montage de l'anneau sur la jante 3, on pourra procéder à un laminage préalable de la partie haute comme cela est décrit ci-dessus.

## Revendications

1. Roue (1) pour cycle comportant une jante (3) et un pneumatique (2), de largeur S; ladite jante (3) étant constituée par un corps de révolution dont la section comporte une partie principale (4), de largeur L supérieure à la largeur S, et une partie périphérique (6) qui est placée, radialement, à l'extérieur de ladite partie principale (4) et qui comporte une cavité annulaire (23) dans laquelle est reçu partiellement ledit pneumatique (2) ; la surface externe de ladite roue (1) étant constitués par les portions du pneumatique et de la jante qui font face à l'extérieur de la roue; **caractérisée en ce que** la roue (1) comprend en outre une garniture d'interface (45) placée au contact de la jante (3) et du pneumatique (2), ladite garniture d'interface constituant une portion intermédiaire de ladite surface externe de la roue et **en ce que** ladite garniture (45) est une pièce déformable et distincte du pneumatique et de la jante.

2. Roue (1) selon la revendication 1, **caractérisée en ce que** ladite garniture d'interface (45) vient se placer dans une gorge (15) dont une paroi latérale est une portion de la surface extérieure du pneumatique (2) et une autre paroi latérale est une portion de la surface extérieur de la jante (3), et **en ce qu'**au moins 40%, du volume de la garniture d'interface soit constitué par un espace creux.

3. Roue (1) selon l'une des revendications précédentes, **caractérisée en ce que** ladite garniture d'interface s'étend sensiblement entre un cercle intérieur C1 d'axe A et de diamètre $D_1$ et un cercle extérieur C2 d'axe A et de diamètre $D_2$, ledit diamètre $D_2$ étant supérieur au diamètre extérieur de la roue, D, diminuée des quatre-tiers de la largeur, S, du pneu à l'état gonflé :

$$D_2 > D - (4/3) \times S$$

4. Roue (1) selon l'une des revendications précédentes, **caractérisée en ce que** le profil en section de la surface extérieure de ladite garniture d'interface est une portion de courbe dont le rayon de courbure, p, est toujours supérieur à la largeur, S, du pneu à l'état gonflé.

5. Roue (1) selon l'une des revendications précédentes, **caractérisée en ce que** la hauteur, h, de ladite garniture d'interface est supérieure à 25% de la largeur, S, du pneu à l'état gonflé.

6. Roue (1) selon l'une des revendications précédentes, **caractérisée en ce que** ladite garniture d'interface comprend un anneau (17), et un espace creux (44) ménagé entre ledit anneau et le pneumatique.

7. Roue selon la revendication précédente, **caractérisée en ce que**, selon une section plane passant par l'axe de la roue, ledit espace creux a une superficie comprise entre 5 et 25 mm$^2$.

8. Roue (1) selon l'une des revendications précédentes, **caractérisée en ce que** les anneaux de la garniture d'interface sont réalisés dans un matériau dont la densité est inférieure à la densité du matériau principal de la jante.

**9.** Roue selon la revendication précédente, **caractérisée en ce que** les anneaux de la garniture d'interface sont réalisés dans un matériau dont la densité est inférieure à 1,2, de préférence inférieure à 1,1

**10.** Roue selon la revendication précédente, **caractérisée en ce que** les anneaux de la garniture d'interface sont réalisés dans un matériau de type mousse dont la densité est inférieur à 0,4.

**11.** Roue (1) selon l'une des revendications précédentes, **caractérisée en ce que** ledit pneumatique (2) comporte des talons (22), la jante (3) comporte des crochets (11) prévus pour retenir les talons (22) et **en ce que** ladite garniture comprend un rebord pincé entre ladite tringle (10) et ladite jante (3).

**12.** Roue (1) selon l'une des revendications précédentes, **caractérisée en ce que** ladite garniture comprend un contre-talon (28) qui s'intercale entre le pneu et la jante (3) et contre lequel, le talon (22) du pneu prend appui.

**13.** Roue (1) selon l'une des revendications précédentes, **caractérisée en ce que** les anneaux (17) sont collés sur la jante (3) et/ou sur le pneumatique (2).

**14.** Roue selon l'une des revendications précédentes, **caractérisée en ce que** les anneaux comprennent une base (18) réalisée dans un premier matériau et une lèvre (19) réalisée dans un autre matériau.

**15.** Roue selon l'une des revendications précédentes, **caractérisée en ce que** la circonférence de l'extrémité haute 24 de la lèvre 19 est supérieure de celle le la base 18 de l'anneau d'une valeur comprise entre 4% et 7%, de préférence comprise entre 5% et 6%.

**Claims**

**1.** Wheel (1) for a cycle comprising a rim (3) and a tyre (2) of width S; the said rim (3) consisting of a body of revolution of which the section comprises a main portion (4), of width L greater than the width S, and a peripheral portion (6) which is placed radially outside the said main portion (4) and which comprises an annular cavity (23) in which the said tyre (2) is partially received; the outer surface of the said wheel (1) consisting of the portions of the tyre and of the rim that face the outside of the wheel;
**characterized in that** the wheel (1) also comprises an interface covering (45) placed in contact with the rim (3) and the tyre (2), the said interface covering forming an intermediate portion of the said outer surface of the wheel and **in that** the said covering (45) is a part that can be deformed and is distinct from the tyre and from the rim.

**2.** Wheel (1) according to Claim 1, **characterized in that** the said interface covering (45) is placed in a groove (15) of which one lateral wall is a portion of the outer surface of the tyre (2) and another lateral wall is a portion of the outer surface of the rim (3), and **in that** at least 40% of the volume of the interface covering consists of a hollow space.

**3.** Wheel (1) according to one of the preceding claims, **characterized in that** the said interface covering extends substantially between an inner circle C1 of axis A and of diameter $D_1$ and an outer circle C2 of axis A and of diameter $D_2$, the said diameter $D_2$ being greater than the outer diameter of the wheel, D, minus four thirds of the width, S, of the tyre in the inflated state:

$$D_2 > D - (4/3) \times S$$

**4.** Wheel (1) according to one of the preceding claims, **characterized in that** the sectional profile of the outer surface of the said interface covering is a portion of a curve of which the radius of curvature, $\rho$, is always greater than the width, S, of the tyre in the inflated state.

**5.** wheel (1) according to one of the preceding claims, **characterized in that** the height, h, of the said interface covering is 25% greater than the width, S, of the tyre in the inflated state.

**6.** Wheel (1) according to one of the preceding claims, **characterized in that** the said interface covering comprises a ring (17) and a hollow space (44) arranged between the said ring and the tyre.

7. Wheel according to the preceding claim, **characterized in that**, on a flat section passing through the axis of the wheel, the said hollow space has a surface area of between 5 and 25 mm$^2$.

8. Wheel (1) according to one of the preceding claims, **characterized in that** the rings of the interface covering are made of a material of which the density is less than the density of the main material of the rim.

9. Wheel according to the preceding claim, **characterized in that** the rings of the interface covering are made of a material of which the density is less than 1.2, preferably less than 1.1.

10. Wheel according to the preceding claim, **characterized in that** the rings of the interface covering are made of a material of foam type of which the density is less than 0.4.

11. Wheel (1) according to one of the preceding claims, **characterized in that** the said tyre (2) comprises beads (22), the rim (3) comprises hooks (11) designed to hold the beads (22) and **in that** the said covering comprises a ridge pinched between the said bead wire (10) and the said rim (3).

12. Wheel (1) according to one of the preceding claims, **characterized in that** the said covering comprises a counter-bead (28) which is inserted between the tyre and the rim (3) and against which the bead (22) of the tyre rests.

13. Wheel (1) according to one of the preceding claims, **characterized in that** the rings (17) are bonded to the rim (3) and/or to the tyre (2).

14. Wheel according to one of the preceding claims, **characterized in that** the rings comprise a base (18) made of a first material and a lip (19) made of another material.

15. Wheel according to one of the preceding claims, **characterized in that** the circumference of the top end (24) of the lip (19) is greater than that of the base (18) of the ring by a value of between 4% and 7%, preferably between 5% and 6%.

**Patentansprüche**

1. Rad (1) für ein Fahrrad, das eine Felge (3) und einen Reifen (2) mit der Breite S umfasst; wobei die Felge (3) durch einen rotationssymmetrischen Körper gebildet wird, dessen Querschnitt einen Hauptteil (4) mit der Breite L, größer als die Breite s, und einen Umfangsteil (6), der radial außerhalb des Hauptteils (4) angeordnet ist und eine ringförmige Vertiefung (23), in der der Reifen (2) teilweise aufgenommen wird, aufweist, umfasst; wobei die Außenfläche des Rads (1) durch die Teile des Reifens und der Felge gebildet wird, die nach außerhalb des Rads weisen; **dadurch gekennzeichnet, dass** das Rad (1) des Weiteren ein Grenzflächenelement (45) umfasst, das so angeordnet ist, dass es die Felge (3) und den Reifen (2) berührt, wobei das Grenzflächenelement einen zwischenteil der Außenfläche des Rads bildet, und dass das Element (45) ein verformbares und vom Reifen und der Felge getrenntes Teil ist.

2. Rad (1) nach Anspruch 1, **dadurch gekennzeichnet, dass** das Grenzflächenelement (45) in eine Nut (15) angeordnet wird, von der eine Seitenwand ein Teil der Außenfläche des Reifens (2) ist und eine andere Seitenwand ein Teil der Außenfläche der Felge (3) ist, und dass mindestens 40% des Volumens des Grenzflächenelements durch einen Hohlraum gebildet werden.

3. Rad (1) nach einem der vorhergehenden Ansprüche, **dadurch gekennzeichnet, dass** sich das Grenzflächenelement im Wesentlichen zwischen einem inneren Kreis C1 mit der Achse A und dem Durchmesser $D_1$ und einem äußeren Kreis C2 mit der Achse A und dem Durchmesser $D_2$ erstreckt, wobei der Durchmesser $D_2$ größer als der Außendurchmesser des Rads D, minus vier Drittel der Breite S des Reifens im aufgepumpten Zustand ist:

$$D_2 > D - (4/3) \times S .$$

4. Rad (1) nach einem der vorhergehenden Ansprüche, **dadurch gekennzeichnet, dass** das Querschnittsprofil der Außenfläche des Grenzflächenelements ein Teil einer Kurve ist, deren Krümmungsradius p immer größer als die Breite S des Reifens im aufgepumpten Zustand ist.

5. Rad (1) nach einem der vorhergehenden Ansprüche, **dadurch gekennzeichnet, dass** die Höhe h des Grenzflächenelements größer als 25% der Breite S des Reifens im aufgepumpten Zustand ist.

6. Rad (1) nach einem der vorhergehenden Ansprüche, **dadurch gekennzeichnet, dass** das Grenzflächenelement einen Ring (17) und einen zwischen dem Ring und dem Reifen ausgebildeten Hohlraum (44) umfasst.

7. Rad nach dem vorhergehenden Anspruch, **dadurch gekennzeichnet, dass** der Hohlraum gemäß einem Ebenenschnitt durch die Radachse einen Flächeninhalt von 5 bis 25 mm$^2$ aufweist.

8. Rad (1) nach einem der vorhergehenden Ansprüche, **dadurch gekennzeichnet, dass** die Ringe des Grenzflächenelements aus einem Material hergestellt sind, dessen Dichte geringer als die Dichte des Hauptmaterials der Felge ist.

9. Rad nach dem vorhergehenden Anspruch, **dadurch gekennzeichnet, dass** die Ringe des Grenzflächenelements aus einem Material hergestellt sind, dessen Dichte weniger als 1,2 und vorzugsweise weniger als 1,1 beträgt.

10. Rad nach dem vorhergehenden Anspruch, **dadurch gekennzeichnet, dass** die Ringe des Grenzflächenelements aus einem Schaummaterial hergestellt sind, dessen Dichte weniger als 0,4 beträgt.

11. Rad (1) nach einem der vorhergehenden Ansprüche, **dadurch gekennzeichnet, dass** der Reifen (2) Wülste (22) umfasst, wobei die Felge (3) Haken (11) umfasst, die zum Festhalten der Wülste (22) vorgesehen sind, und dass das Element einen zwischen dem Wulstkern (10) und der Felge (3) festgeklemmten Rand umfasst.

12. Rad (1) nach einem der vorhergehenden Ansprüche, **dadurch gekennzeichnet, dass** das Element einen Gegenwulst (28) umfasst, der zwischen dem Reifen und der Felge (3) eingefügt ist und an dem der Wulst (22) des Reifens anliegt.

13. Rad (1) nach einem der vorhergehenden Ansprüche, **dadurch gekennzeichnet, dass** die Ringe (17) auf die Felge (3) und/oder den Reifen (2) geklebt sind.

14. Rad nach einem der vorhergehenden Ansprüche, **dadurch gekennzeichnet, dass** die Ringe eine Basis (18), die aus einem ersten Material hergestellt ist, und eine Lippe (19), die aus einem anderen Material hergestellt ist, umfassen.

15. Rad nach einem der vorhergehenden Ansprüche, **dadurch gekennzeichnet, dass** der Umfang des oberen Endes (24) der Lippe (19) um einen Wert zwischen 4% und 7%, vorzugsweise zwischen 5% und 6%, größer ist als der der Basis (18) des Rings.

*Fig. 1*

Fig. 2

Fig. 3

Fig. 4

Fig. 5

Fig. 6

Fig.7

Fig. 8

Fig. 9

Fig. 10

19

17

18

3

29

## RÉFÉRENCES CITÉES DANS LA DESCRIPTION

**Documents brevets cités dans la description**

- US 5061013 A
- FR 2555106